Europäisches Patentamt

European Patent Office

Office européen des brevets

(11) Publication number: **0 008 015**
**B1**

## EUROPEAN PATENT SPECIFICATION

(45) Date of publication of patent specification: **27.10.82**  (51) Int. Cl.³: **A 23 F  5/46**

(21) Application number: **79102439.1**

(22) Date of filing: **13.07.79**

(54) Coffee capsules and process for their manufacture.

(30) Priority: **07.08.78 US 931503**

(43) Date of publication of application:
**20.02.80 Bulletin 80/4**

(45) Publication of the grant of the patent:
**27.10.82 Bulletin 82/43**

(84) Designated Contracting States:
**AT DE NL SE**

(56) References cited:
**CA - A - 837 021**
**CH - A - 430 407**
**FR - A - 1 503 185**
**FR - A - 2 164 618**
**US - A - 3 419 399**
**US - A - 3 836 682**
**US - A - 3 989 852**
**US - A - 4 044 167**

(73) Proprietor: **SOCIETE DES PRODUITS NESTLE S.A.**
**Case postale 353**
**CH-1800 Vevey (CH)**

(72) Inventor: **Liu, Richard Tien-Szu**
**6855 Downs Street**
**Worthington, Ohio (US)**
Inventor: **Nickerson, Winston R.**
**537 Amrine Mill Road**
**Marysville, Ohio (US)**
Inventor: **Anderson, Charles H.**
**708 Grove Street**
**Marysville, Ohio (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Coffee capsules and process for their manufacture

The invention relates to coffee capsules and to various processes for their production.

As it is generally difficult to retain the aroma principles of freshly roasted coffee in a liquid coffee extract prior to drying, these aromatics have been combined with dried extracts, for example by spraying as an emulsion with coffee oil. Even when the aromatized dried coffee is stored in sealed containers, however, the aroma is gradually dissipated so that not long after the container is opened most of it is lost.

Encapsulation of coffee aroma has been investigated as a means of holding this aroma for long periods of time in instant coffee. For example according to CH—A—430407 a solution of coffee aromatics in coffee oil is encapsulated in an edible, tasteless film-forming agent such as gelatine, but this amounts to the introduction of extraneous matter into coffee. US—A—3989852 describes the preparation of coffee aroma capsules in which an aromatic distillate is emulsified with soluble coffee solids and coffee oil to produce a thick, viscid paste, whereafter the paste is sprayed into pulverized instant coffee which acts as a sorbent, film-forming agent. In both cases, the amount of encapsulated aroma is rather low and this necessitates the addition of a relatively high proportion of capsules to instant coffee. According to US—A—4044167 coffee grinder gas aroma, carbohydrate solids (e.g. soluble coffee powder) and a glyceride such as coffee oil are combined, the mixture is solidified by cooling and comminuted, and the resulting particles are mixed with soluble coffee powder. Upon warming, the aroma/powder/oil mixture liquefies and coats the powder. A true capsule is thus not formed although it is suggested that additional powder may adhere to the oil wetted particles to form a shell or agglomerate. This latter effect, however, appears to be incidental to the main oil coating because no positive steps are described for producing a continuous shell.

The invention, which aims to overcome these drawbacks, provides coffee capsules comprising a hardened shell of coffee and/or coffee substitute solids surrounding a droplet of coffee oil containing coffee aroma. The term "coffee capsules" is used for convenience, denoting capsules containing coffee aroma.

The coffee capsules according to the invention may have a variety of dimensions, ranging for instance from an average diameter of 250—600 $\mu$m in round figures (30—60 US Standard Mesh) up to 2.25—3.35 mm in round figures (6—8 Mesh). Analyses have shown that the capsule shell or wall is highly impervious, providing for long-term aroma retention. It appears that the larger are the capsules the more impervious are their walls and thus they contain a larger amount of aromatized oil. The aroma strength is retained for as long as seven months without any apparent degradation of quality. Capsule wall thickness may vary being on the average from about 0.1 to 0.4 mm, and is generally dependent on the capsule size. The intact capsules have essentially no smell, but on addition of hot water they break down and release aromatized oil within 15 to 30 s, and are completely dissolved in 90 s without stirring. A strong burst of aroma is given off. The same effect is produced when the capsules are crushed between the fingers or broken with a spoon.

In the preparation of the capsules, the initial step is the preparation of a stable emulsion, which is highly desirable for forming a good capsule. The first criterion is the proportion of coffee oil to aromatic coffee distillate utilized, bearing in mind that a higher oil content, with a correspondingly lower distillate content, seriously limits the amount of aroma in the capsule, whereas a lower oil content approaches the limit at which the emulsion becomes more difficult to prepare.

In practice, emulsions with oil contents as high as 80% and as low as 30% by weight are suitable, preferably 50% or below. Such emulsions may be pressurized and/or sprayed without breakdown.

The temperature at which the emulsion is prepared and stored is a significant factor as it becomes less stable when the temperature rises. Thus preferred temperatures are within the range of 20 and 40°C, for instance room temperature. The incorporation of coffee solids into the emulsion is not advisable since the resulting capsules have smaller cavities and contain less oil and consequently less aroma.

Preparation of capsules from the emulsion may be carried out using a number of techniques. For example, capsules may be formed by allowing droplets of emulsion to fall onto the surface of fine instant coffee and/or coffee substitute powder. By agitation of these droplets in the powder, capsules are formed, which after separation may be incorporated as such into an instant coffee powder.

In a variant, the capsules are dried after the initial coating of the droplet with the fine coffee powder. A heat lamp may be used for that purpose. Alternatively, drying may be effected by allowing the fine instant coffee powder to absorb water from the emulsion and shell at room temperature over a period of time, for instance a few days.

This technique yields rather large capsules (2.25—3.35 mm) which have impervious walls and contain large amounts of aromatized oil within their interiors.

Smaller capsules may be prepared by spraying the emulsion of oil and distillate onto agitated fine instant coffee powder. Various sizes of capsules, from 420 $\mu$m to 2.35 mm, may be obtained, depending on the spraying device used. These capsules desiccate faster than the 2.35—3.35 mm

**0 008 015**

capsules, from 1 hour to overnight for the larger size. By spraying the emulsion at 50°C, the capsules formed desiccate rapidly, within minutes of their formation.

In another variant, permitting for very accurate control of the size of the finished capsules, the emulsion is frozen, at −80°C for instance, and ground, and the particulate frozen emulsion is added to fine instant coffee powder. In a preferred embodiment, the frozen emulsion particles are exposed to water vapour before contacting with the powder, to produce an external coating of liquid water thus forming firm capsules.

It has been observed that the actual encapsulation occurs when the emulsion particles are placed inside a bed of fine instant coffee powder, with excess moisture being absorbed from the capsules by the surrounding powder. For instance, 8% moisture capsules may be formed and dried within a matter of minutes by using powder at 50°C.

The size of the fine coffee or coffee substitute extract powder, as well as its moisture content, do not appear to be critical factors as long as the powder is not too coarse. Typical particle dimensions for fine instant powder are 60 $\mu$m (230 Mesh) to 150 $\mu$m (100 Mesh) with a moisture content from 1.5—6% by weight.

The capsules may be combined with soluble coffee solids in different ways.

For example, the capsules may be simply mixed with instant coffee powder, involving simple occlusion of the capsules in the instant coffee, preferably after screening, for instance through an 8 Mesh screen (2.35 mm). It appears that up to 20% of the final product may consist of capsules without perceptible change in appearance. Advantageously, the capsules have excess powder clinging to the surface as this ensures an even colouring of the final product.

Alternatively, the capsules may be agglomerated with fine particles produced during spray-drying of coffee extract, or which are obtained by grinding.

The capsules may also be mixed, in the production of freeze-dried extracts, with concentrated coffee liquor prior to freezing and grinding. Using this technique, the capsules should desirably be small and numerous enough for the percentage broken or damaged by the grinder to be of little significance. An average capsule size between 250 and 600 $\mu$m is preferred.

The level of capsule incorporation into instant coffee may vary within wide limits, but is typically from 1 to 10%, depending on the size of the capsules. As a general rule, the smaller the capsules, the greater the proportion that may be incorporated in instant coffee.

As mentioned above, instant coffee containing the capsules according to the invention is superior to regular instant coffee in a number of aspects. On dissolution in hot water, a strong burst of aroma is given off. Moreover, repeated opening of the container does not affect the aroma strength and quality and even the last spoon will give a burst of aroma on contact with hot water.

The following examples further illustrate the invention; the ratios and percentages are given by weight.

Examples 1 to 9

| Ex. | Preparation technique* | Drying | Size | Aromatized oil content |
|---|---|---|---|---|
| 1 | Dropping | self desiccation | 2.35—3.35 mm | 35% |
| 2 | " | " " | " | 35% |
| 3 | " | self des. 50°C | " | 35% |
| 4 | " | heat lamp | " | 35% |
| 5 | " | "delayed drying" | " | 35% |
| 6 | Spraying | self desiccation | full range 420 $\mu$m—2.35 mm | 8—35% |
| 7 | " | self des. 50°C | " | 8—35% |
| 8 | Freezing | self desiccation | 1 mm | 20% |
| 9 | Freezing with steam treatment | " " | 1 mm | 20% |

*see below

Comments

Preparation of the emulsion

Ex. 1: An emulsion of coffee oil and aromatic coffee distillate is prepared by shaking in a closed jar 1 part of coffee oil (obtained by extraction from spent grounds) with 1 part of a coffee distillate. After homogenization, this emulsion is allowed to stand and is kept at 25°C. No siginificant breakdown is observed up to 24 hours.

All other examples: coffee oil is recirculated through three 1 cm stationary mixing elements (static mixers) connected in series at pressures up to 10 bar, the distillate being slowly added into the stream until the desired 1:1 coffee oil to distillate ratio is obtained. The emulsion is kept at 25°C and no significant breakdown is noticeable after 72 hours.

3

Dropping

Ex. 1 and 2: The capsules are prepared by allowing droplets of the emulsion to fall from a Pasteur pipette onto the surface of a bed of 150 $\mu$m (100 Mesh) fine coffee powder having a moisture content of 3%, at an emulsion to powder ratio of 5% (i.e. 1:20). By agitation of the droplets in the powder, capsules are formed which are dried by allowing the fine powder to desiccate the water from the emulsion and shell at room temperature over a period of several days (self-desiccation).

Ex. 3: The capsules are dried within a few hours by allowing the fine powder to desiccate the water from the emulsion and shell at a temperature of 50°C.

Ex. 4: The capsules are dried within 1 to 2 hours by rotating the capsules in the fine powder at room temperature under a heat lamp.

Ex. 5: The capsules are not dried and are separated from the fine powder by screening after the shells have developed sufficiently for mechanical handling. Capsules are obtained which have an excess of powder clinging to the surfaces which absorbs excess moisture (delayed drying).

Spraying

Ex. 6: A flat spray of the emulsion is directed through nozzle onto the surface of fine coffee powder at a distance of 20 cm. The capsules obtained by contact with the fine powder desiccate within a few hours.

Ex. 7: Capsules are obtained as described in the preceding example, the fine powder being maintained at 50°C. They desiccate within minutes.

Freezing

Ex. 8: The emulsion is fast-frozen at −80°C and ground with dry ice in a Waring blender. Addition of frozen particles to fine powder yields capsules with desiccate in just a slightly longer time than comparably sized capsules obtained by dropping or spraying. The slightly longer time is required to allow the capsules to warm to ambient temperature.

Ex. 9: As in Ex. 8, except that the frozen emulsion particles are exposed to steam before contact with the fine powder.

Examples 10 and 11

Ex. 10: The capsules are prepared by allowing droplets of the emulsion to fall from an eye dropper onto the surface of less than 100 $\mu$m (140 Mesh) chicory powder (particle size below 100 $\mu$m, or minus 140 Mesh) having a moisture content of 5.3%, at an emulsion to powder ratio of 3% (i.e. 3:100). On agitation of the droplets in the powder, capsules are formed which are dried by allowing the fine powder to desiccate the water from the emulsion and shell at room temperature over a period of several days (self-desiccation).

Ex. 11: The procedure of Example 10 is repeated with a powder consisting of a 50/50 mixture of soluble coffee and chicory solids less than 100 $\mu$m (140 Mesh) in size with a moisture content of 5.2%. The emulsion to powder ratio is 3%. The capsules have a hard shell and are practically indistinguishable from capsules produced from coffee powder alone.

Examples 12 to 15

Ex. 12: Capsules prepared as described in Example 5 and having excess powder clinging to the surface are blended with a regular freeze-dried instant coffee in amounts depending on the size of capsules, and as shown in Table I. The presence of the capsules in the blend is practically undetectable.

Ex. 13: The procedure of Example 12 is repeated with a spray-dried coffee using capsules with proportionally smaller dimensions.

Ex. 14: In an agglomeration process for instant coffee, capsules prepared as described in Example 6 are added to the fines which are recycled into the agglomeration tower in the proportions given in Table I. The presence of capsules in the agglomerated product is practically undetectable.

Ex. 15: In the preparation of freeze-dried coffee, small capsules prepared as described in Example 6 are added, in the proportions set out in Table I, to the concentrated extract just before freezing. The capsules become part of the frozen mix which is then processed in the normal way to obtain freeze dried instant coffee.

TABLE I

| Capsule dimensions | Percent of capsules in instant coffee |
|---|---|
| 420—600 $\mu$m | 7.2 |
| 600—850 $\mu$m | 4.6 |
| 850 $\mu$m—1.20 mm | 3.2 |
| 1.20—1.70 mm | 2.3 |
| 1.70—2.35 mm | 1.8 |
| 2.35—3.35 mm | 1.4 |

4

## 0 008 015

### Claims for the contracting states DE NL SE

1. Coffee capsules comprising a hardened shell of instant coffee and/or coffee substitute solids surrounding a droplet of coffee oil containing coffee aroma.

2. A process for producing coffee capsules according to claim 1 which comprises coating particles of a stable emulsion of coffee oil and aromatic coffee distillate with particles of finely divided instant coffee and/or coffee substitute powder by agitating the emulsion particles with the fine powder.

3. A process according to claim 2 in which the emulsion particles are in frozen state.

4. A process according to claim 3 in which the emulsion particles have an external coating of liquid water produced by exposure of the particles to steam.

5. A process according to any one of claims 2 to 4 in which the emulsion contains between 30 and 80% by weight of coffee oil.

6. A process according to any one of claims 2 to 5 in which the instant coffee and/or coffee substitute powder has an average particle size of 60 to 150 $\mu$m.

### Claims for the contracting state AT

1. A process for preparing coffee capsules, comprising a hardened shell of instant coffee and/or coffee substitute solids surrounding a droplet of coffee oil containing coffee aroma, which process comprises coating particles of a stable emulsion of coffee oil and aromatic coffee distillate with particles of finely-divided instant coffee and/or coffee substitute powder by agitating the emulsion particles with the fine powder.

2. A process according to claim 1, in which the emulsion particles are in frozen state.

3. A process according to claim 2, in which the emulsion particles have an external coating of liquid water produced by the action of steam on the particles.

4. A process according to any one of claims 1 to 3, in which the emulsion contains between 30 and 80% by weight of coffee oil.

5. A process according to any one of claims 1 to 4 in which the instant coffee and/or coffee substitute powder has an average particle size of 60 to 150 $\mu$m.

### Revendications pour les Etats Contractants DE NL SE

1. Capsules de café comportant une coquille durcie de café soluble et/ou de particules solides de succédané de café entourant une gouttelette d'huile de café contenant de l'arôme de café.

2. Procédé de production des capsules de café selon la revendication 1 qui comporte l'enrobage des particules d'une émulsion stable d'huile de café et de distillat de café aromatique avec des particules finement divisées d'une poudre de café soluble et/ou de succédané de café par agitation des particules de l'émulsion avec la poudre fine.

3. Procédé selon la revendication 2, caractérisé en ce que les particules d'émulsion sont à l'état congelé.

4. Procédé selon la revendication 3, caractérisé en ce que les particules d'émulsion comportent une couche extérieure d'eau liquide formée par contact des particules avec de la vapeur d'eau.

5. Procédé selon l'une quelconque des revendications 2 à 4, caractérisé en ce que l'émulsion contient entre 30 et 80% en poids d'huile de café.

6. Procédé selon l'une quelconque des revendications 2 à 5, caractérisé en ce que la poudre de café soluble et/ou de succédané de café a une granulométrie moyenne de 60 à 150 $\mu$.

### Revendications pour l'etat contractant AT

1. Procédé de production des capsules de café comportant une coquille durcie de café soluble et/ou des particules solides de succédané de café entourant une goutelette d'huile de café contenant du distillat aromatique de café, le procédé comportant l'enrobage de particules d'une émulsion stable d'huile de café et de distillat aromatique de café avec des particules finement divisées d'une poudre de café soluble et/ou de succédané de café par agitation des particules de l'émulsion avec la poudre fine.

2. Procédé selon la revendication 1, dans lequel les particules de l'émulsion sont à l'état congelé.

3. Procédé selon la revendication 2, dans lequel les particules de l'émulsion comportent un enrobage extérieur d'eau liquide produit par l'action de la vapour d'eau sur les particules.

4. Procédé selon l'une quelconque des revendications 1 à 3, dans lequel l'émulsion contient entre 30 et 80% par poids d'huile de café.

5. Procédé selon l'une quelconque des revendications 1 à 4, dans lequel la poudre de café soluble et/ou de succédané de café a une granulométrie moyenne de 60 à 150 $\mu$m.

### Patentansprüche für die Vertragsstaate DE NL SE

1. Kaffee-Kapseln, umfassend eine einen Kaffeearoma enthaltenden Tropfen aus Kaffeeöl umgebende erhärtete Schale aus Instant-Kaffee- und/oder Kaffee-Ersatz-Feststoffen.

2. Ein Verfahren zur Herstellung von Kaffee-Kapseln nach Anspruch 1, welches das Überziehen von Teilchen einer stabilen Emulsion von Kaffeeöl und aromatischem Kaffeedestillat mit Teilchen von feinteiligem Instant-Kaffee- und/oder Kaffee-Ersatz-Pulver durch Vermischen der Emulsionsteilchen mit dem feinen Pulver umfaßt.

3. Ein Verfahren nach Anspruch 2, in welchem die Emulsionsteilchen in gefrorenem Zustand vorliegen.

4. Ein Verfahren nach Anspruch 3, in welchem die Emulsions-teilchen einen durch Einwirkenlassen von Dampf auf die Teilchen gebildeten äußeren Überzug aus flüssigem Wasser aufweisen.

5. Ein Verfahren nach einem der Ansprüche 2 bis 4, in welchem die Emulsion zwischen 30 und 80 Gew.-% Kaffeeöl enthält.

6. Ein Verfahren nach einem der Ansprüche 2 bis 5, in welchem das Instant-Kaffee- und/oder Kaffee-Ersatz-Pulver eine durchschnittliche Teilchengröße von 60 bis 150 μm aufweist.

## Patentansprüche für den Vertragsstaat AT

1. Verfahren zur Herstellung von Kaffee-Kapseln, gekennzeichnet durch das Überziehen von Teilchen einer stabilen Emulsion von Kaffeeöl und aromatischen Kaffeedestillat mit Teilchen von feinteiligem Instant-Kaffee- und/oder Kaffee-Ersatz-Pulver durch Vermischen der Emulsionsteilchen mit dem feinen Pulver.

2. Verfahren nach Anspruch 1, in welchem die Emulsionsteilchen in gefrorenem Zustand vorliegen.

3. Verfahren nach Anspruch 2, in welchem die Emulsions-teilchen einen durch Einwirkenlassen von Dampf auf die Teilchen gebildeten äußeren Überzug aus flüssigen Wasser aufweisen.

4. Verfahren nach einem der Ansprüche 1 bis 3, in welchem die Emulsion zwischen 30 und 80 Gew.-% Kaffeeöl enthält.

5. Verfahren nach einem der Ansprüche 1 bis 4, in welchem das Instant-Kaffee- und/oder Kaffee-Ersatz-Pulver eine durchschnittliche Teilchengröße von 60 bis 150 μm aufweist.